# EUROPÄISCHE PATENTANMELDUNG

(11) **EP 3 281 766 A1**
(43) Veröffentlichungstag der Anmeldung: **14.02.2018**
(21) Anmeldenummer: 16183782.8
(22) Anmeldetag: 11.08.2016
(51) Int. Cl.: B29C 47/12, B29C 47/92, B29C 67/00

(54) **EXTRUSIONSDÜSE, MASCHINE UND VERFAHREN ZUR 3D FERTIGUNG**

(71) Anmelder: Siemens Aktiengesellschaft, 80333 München (DE)
(72) Erfinder: Bauer, Marcus, 91080 Spardorf (DE); Jähnicke, Jens, 09112 Chemnitz (DE)

(57) **Zusammenfassung**

Die additive Fertigung mittels Materialextrusion soll dahingehend verbessert werden, dass in einfacher und kostengünstiger Weise Material-Bahnen (B_{V}, B_{K}, 7) variabler Breite (8) bei der schichtweisen Herstellung eines Werkstücks (2) erzeugt werden. Dies wird erreicht durch Verwendung einer Düse (3) mit länglichem Querschnitt der Materialaustrittsöffnung (D_{E}; 10), wobei mittels einer Rotationsachse (6) in Verbindung mit einer Steuereinrichtung (5) die Ausrichtung der Materialaustrittsöffnung (D_{E}; 10) in Bezug auf eine Bewegungsrichtung (v) beim Erzeugen einer Material-Bahn (B_{V}, B_{K}, 7) eingestellt werden kann.

Die Erfindung bietet den Vorteil, dass mit ein und derselben Düse (3) Material-Bahnen (B_{V}, B_{K}, 7) bzw. Werkstück-Strukturen unterschiedlicher bzw. variabler Breite (8) erzeugt werden können.

## Beschreibung

Die Erfindung betrifft eine Düse mit einer Materialaustrittsöffnung zur Materialextrusion bei der additiven Fertigung eines Werkstücks. Ferner betrifft die Erfindung ein Verfahren zur additiven Fertigung eines Werkstücks mittels einer derartigen Düse, eine Maschine zur additiven Fertigung eines Werkstücks, die eine derartige Düse umfasst, sowie eine Steuereinrichtung für eine derartige Maschine.

Bei der additiven Fertigung eines Werkstücks mittels Materialextrusion wird eine Düse in einem Arbeitsraum einer Maschine positioniert und eine Schmelze durch die Düse gedrückt während sich die Düse im Arbeitsraum bewegt. Durch die Überlagerung einer Vielzahl derart erzeugter Material-Bahnen wird das Werkstück Schicht um Schicht aufgebaut.

Heute verwendete Düsen haben einen runden Querschnitt, damit die entstehende Bahn unabhängig von der Bewegungsrichtung und Ausrichtung der Düse gleiche Eigenschaften und insbesondere eine gleiche Breite aufweist. Um das Verfahren an unterschiedliche Anforderungen anzupassen und insbesondere um Strukturen unterschiedlicher Größe aufzubauen, werden Düsen mit unterschiedlichen Querschnitten eingesetzt. Das heißt, die Düsen unterscheiden sich insbesondere hinsichtlich der Durchmesser ihrer Materialaustrittsöffnungen. Mit einer "großen" Düse mit einer großen Materialaustrittsöffnung kann man eine breite Wand mit jeweils einer Material-Bahn pro Schicht herstellen, anstatt die Wand mit einer kleineren Düse schrittweise durch mehrere nebeneinander liegende Bahnen pro Schicht aufzubauen. Düsen mit einer kleineren Querschnittsfläche der Materialaustrittsöffnung werden jedoch benötigt, da sich besonders filigrane Strukturen nur so erzeugen lassen.

Sollen bei einem Werkstück sehr unterschiedliche Strukturen erzeugt werden, so können diese mit unterschiedlichen Düsen erzeugt werden. Dazu ist entweder ein zeitaufwändiger Wechsel der Düsen während der Herstellung des Werkstücks erforderlich, oder es muss eine aufwändige und verhältnismäßig teure Maschine verwendet werden, bei der gleichzeitig unterschiedlich große Düsen vorhanden sind.

Aufgabe der vorliegenden Erfindung ist es, auf kostengünstige Weise die Herstellung unterschiedlich breiter Strukturen bei der additiven Fertigung eines Werkstücks zu ermöglichen.

Diese Aufgabe wird durch die Verwendung einer Düse mit den in Anspruch 1 angegebenen Merkmalen gelöst. Die erfindungsgemäße Düse weist eine Materialaustrittsöffnung mit einem länglichen, beispielsweise ovalen Querschnitt auf. Je nach Stellung der Düse in Bezug zur Bewegungsrichtung beim Materialauftrag können so mit ein und derselben Düse Material-Bahnen unterschiedlicher Breite erzeugt werden.

Unter einem länglichen Querschnitt ist dabei allgemein ein Querschnitt zu verstehen, der im Verhältnis zu seiner Breite eine größere Länge aufweist und somit insbesondere von einem kreisrunden oder quadratischen Querschnitt abweicht.

Eine vorteilhafte Ausführungsform der Erfindung sieht vor, dass die Form der Materialaustrittsöffnung durch zwei sich gegenüberliegend angeordnete und zumindest näherungsweise halbkreisförmige Abschnitte gebildet wird, die um ein Vielfaches ihres Radius voneinander beabstandet sind. Vorteilhaft ist ein Zwischenbereich der Materialaustrittsöffnung zwischen den beiden halbkreisförmigen Abschnitten in der Mitte schmaler als der Durchmesser eines Halbkreises. Der Zwischenbereich hat somit eine konkave Wölbung. Diese spezielle Formgebung hat den Vorteil, dass der Druckverlust während der Material Extrusion über die gesamte Materialaustrittsöffnung zumindest näherungsweise den gleichen Wert hat. Dadurch lassen sich besonders homogene Material-Schichten erzeugen.

Ein erfindungsgemäßes Verfahren zur Lösung der eingangs gestellten Aufgabe sieht vor, dass eine Schmelze zum Erzeugen einer Material-Bahn durch eine wie oben beschrieben ausgebildete Düse gepresst wird während die Düse entlang einer vorbestimmten Bahn bewegt wird. Durch Drehen der Düse gegenüber dem Werkstück um eine Rotationsachse kann durch Einstellung einer bestimmten Winkelstellung in Bezug auf die Bewegungsrichtung eine bestimmte Breite der erzeugten Material-Bahn eingestellt werden. Zum Drehen der Düse relativ zum Werkstück kann die Düse mit einer entsprechenden Rotationsachse versehen sein, um die die Düse gedreht werden kann. Weiterhin kann auch das Werkstück um eine Rotationsachse gedreht werden, beispielsweise indem es auf einem um eine Rotationsachse drehbaren Werkzeugtisch befestigt ist. Darüber hinaus ist es zur Rotation der Düse relativ zum Werkstück auch möglich, dass sowohl die Düse als auch das Werkstück jeweils um eine Rotationsachse drehbar sind.

Bei einer bevorzugten Ausführungsform der Erfindung fällt die Symmetrieachse der Düse bzw. der Materialaustrittsöffnung der Düse mit der Rotationsachse der Düse zusammen. Die Rotationsachse steht weiterhin vorzugsweise senkrecht auf der Bewegungsrichtung der Düse bzw. der Ebene, in der die Düse bewegt wird. Durch diesen Aufbau kann eine besonders einfache und kostengünstige erfindungsgemäße Maschine erreicht werden.

Bei der erfindungsgemäßen Maschine kann durch wenigstens eine, gegenüber herkömmlichen Maschinen zur additiven Fertigung zusätzliche gesteuerte Achse schnell und flexibel auf unterschiedliche Anforderungen reagiert werden. Vorteilhaft können ohne zeit- und kostenaufwändige Veränderungen an der Maschine, insbesondere ohne Wechseln der verwendeten Düse, sofort Material-Bahnen unterschiedlicher Breite erzeugt werden. Es ist sogar möglich, bei einer einzelnen erzeugten Material-Bahn deren Breite im Verlauf der Material-Bahn zu variieren. Somit lassen sich mit einer Düse einerseits sehr filigrane Strukturen realisieren und andererseits Bereiche des Werkstücks mit grober Struktur vergleichsweise schnell herstellen. Durch Drehen der Düse um einen bestimmten Winkel um die Rotationsachse und die dynamisch Anpassung des so eingestellten Rotationswinkels in Bezug auf eine Referenzachse, beispielsweise eine Linearachse der betreffenden Maschine, kann die Breite der erzeugten Material-Bahn in einfacher Weise eingestellt bzw. variiert werden.

Ein weiterer Vorteil der Erfindung ist darin zu sehen, dass zwischen Extremwerten beliebige Wandstärken realisiert werden können. Mit der herkömmlichen Technik können lediglich Wandstärken, die einem Vielfachen der Nennwandstärke entsprechen, erzeugt werden, also 1x oder 2x oder 3x ... die Nennwandstärke.

Werden mittels einer Düse mit kreisrundem Querschnitt der Materialaustrittsöffnung krummlinige Material-Bahnen erzeugt, so hat eine Änderung der Bewegungsrichtung keinen Einfluss auf die Breite der erzeugten Material-Bahn. Anders hingegen bei der erfindungsgemäßen Verwendung einer Düse, deren Materialaustrittsöffnung einen länglichen Querschnitt aufweist. Ohne Nachjustierung des Rotationswinkels würde die Breite einer erzeugten Material-Bahn abhängig von der jeweiligen Bewegungsrichtung beim Erzeugen der Bahn Schwankungen unterworfen sein. Um diesen Effekt zu vermeiden, sieht eine bevorzugte Ausführungsform der Erfindung vor, bei einer Änderung der Bewegungsrichtung bei der Bewegung der Düse entlang einer vorbestimmten, nicht geradlinigen Bahn den Rotationswinkel der Düse an die jeweilige Krümmung der Bahn bzw. die jeweilige Bewegungsrichtung anzupassen. Die Anpassung erfolgt insbesondere so, dass die Breite der jeweils erzeugten Material-Bahn über ihren gesamten Verlauf gleich bleibt. Dies wird insbesondere dadurch erreicht, dass der Rotationswinkel der Düse stets so eingestellt wird, dass ein Winkel, den eine in der Ebene der Materialaustrittsöffnung verlaufende Symmetrieachse der Materialaustrittsöffnung und die jeweilige Bewegungsrichtung einschließen, konstant gehalten wird. Somit kann auch bei Verwendung einer Düse mit länglichem Querschnitt der Materialaustrittsöffnung der gleiche Effekt wie bei der Verwendung einer Düse mit kreisrunder Materialaustrittsöffnung erreicht werden, nämlich die Erzeugung von Material-Bahnen mit über ihrem gesamten Verlauf gleichbleibender Breite, auch bei einem nicht geradlinigen Verlauf der Material-Bahnen.

Eine erfindungsgemäße Maschine zur additiven Fertigung eines Werkstücks mittels Materialextrusion sieht wie üblich eine Positioniereinrichtung mit wenigstens drei linearen Achsen zur Positionierung einer Düse in einem Arbeitsraum vor. Die Positioniereinrichtung wird durch eine damit verbundene Steuereinrichtung gesteuert. Bei der Verwendung einer Düse mit länglichem Querschnitt der Materialaustrittsöffnung umfasst die Positioniereinrichtung ferner eine Rotationsachse, die vorteilhaft durch die Symmetrieachse der Düse und insbesondere durch die senkrecht durch die Materialaustrittsöffnung der Düse verlaufende Symmetrieachse der Materialaustrittsöffnung verläuft und bei der beliebige Rotationswinkel eingestellt werden können. Bei der Rotationsachse handelt es sich somit um eine gesteuerte Achse der betreffenden Maschine, die ebenfalls durch die Steuereinrichtung der Maschine gesteuert wird. Vorteilhaft wird der Rotationswinkel beim Erzeugen einer Bahn stets so eingestellt, dass unabhängig von der Bewegungsrichtung beim Erzeugen der Bahn die Breite der Bahn über deren gesamten Verlauf konstant bleibt. Der für die jeweilige Bewegung der Düse entlang der vorbestimmten Bahn erforderliche Rotationswinkel wird für jede Position und Bewegungsrichtung der Düse mittels einer geeigneten Software der Steuereinrichtung ermittelt und eingestellt.

Gegebenenfalls ist es auch erforderlich, die Menge des durch die Düse gedrückten Materials an den Rotationswinkel anzupassen, insbesondere wenn Bahnen unterschiedlicher oder variabler Breite, aber konstanter Schichtdicke erzeugt werden sollen. Je schmaler die erzeugte Bahn, umso weniger Schmelze darf in einer bestimmten Zeiteinheit durch die Düse gedrückt werden, damit die Schichtdicke konstant bleibt. Auch die diesbezügliche Materialmenge wird durch die Steuerung bzw. die darauf laufende Software entsprechend bestimmt und geregelt.

Die Erfindung wird nachfolgend anhand von Ausführungsbeispielen näher erläutert. Dabei zeigen die Figuren
- FIG 1: die Erzeugung von Material-Bahnen für eine feine Struktur gemäß dem Stand der Technik,
- FIG 2: die Erzeugung von Material-Bahnen für eine grobe Struktur gemäß dem Stand der Technik,
- FIG 3: die Erzeugung einer Material-Bahn variabler Breite gemäß der Erfindung,
- FIG 4: die Erzeugung einer krummlinigen Material-Bahn konstanter Breite gemäß der Erfindung,
- FIG 5: eine erfindungsgemäße Maschine zur additiven Fertigung, und
- FIG 6: einen vorteilhaften Querschnitt der Materialaustrittsöffnung einer erfindungsgemäßen Düse.

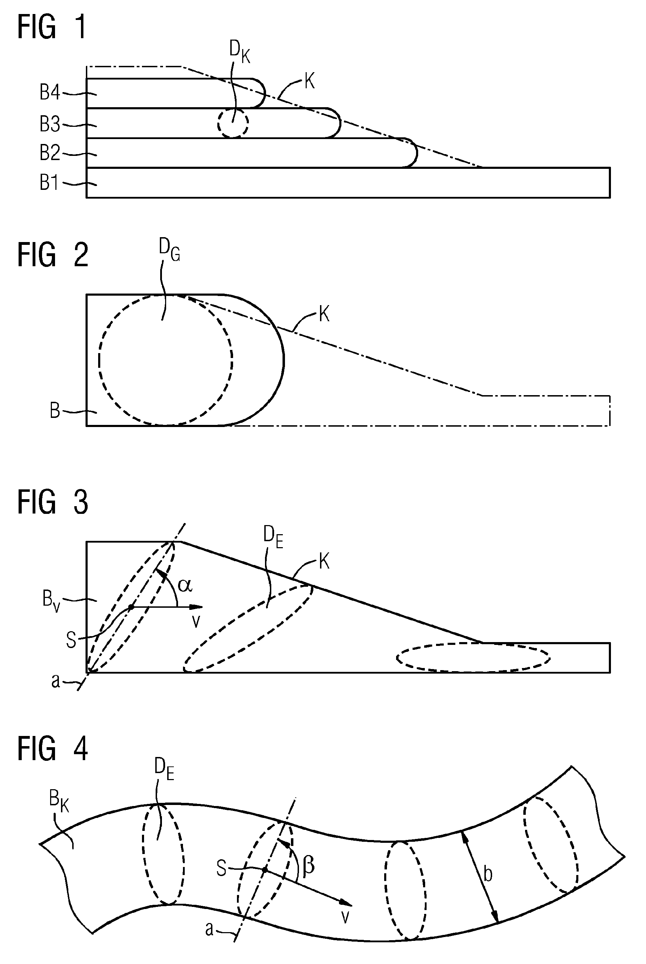

Figur 1 veranschaulicht die Erzeugung einer Sollkontur K mittels einer Düse mit einem kleinen kreisrunden Querschnitt D_{K} der Materialaustrittsöffnung gemäß dem Stand der Technik. Mittels der Düse können feine Strukturen erzeugt werden, jedoch müssen zum Erzeugen einer groben Struktur viele Material-Bahnen B1 bis B4 nebeneinander erzeugt werden. Dies ist zeit- und damit kostenaufwändig. Aus der Figur ist eine Draufsicht auf die nebeneinander angeordneten Material-Bahnen B1 bis B4 ersichtlich, wobei zum Erzeugen einer dreidimensionalen Sollkontur K viele Material-Bahnen übereinander geschichtet werden.

Wie aus Figur 1 ersichtlich ist, kann die gezeigte Sollkontur K mittels der verwendeten Düse mit einem kleinen kreisrunden Querschnitt D_{K} nur relativ ungenau erzeugt werden.

Figur 2 veranschaulicht die Erzeugung der Sollkontur K mittels einer Düse mit einem vergleichsweise großen Durchmesser der kreisrunden Materialaustrittsöffnung D_{G}. Hier kann zwar mit einer Material-Bahn B pro Schicht eine vergleichsweise breite Struktur hergestellt werden, jedoch ist es damit nicht möglich, feine Strukturen zu erzeugen, wie aus der Figur ersichtlich ist. Die Sollkontur K kann somit mit der gezeigten Düse nicht erzeugt werden.

Figur 3 veranschaulicht die Erzeugung der Sollkontur K unter erfindungsgemäßer Verwendung einer Düse mit einem länglichen, insbesondere ovalen Querschnitt der Materialaustrittsöffnung D_{E}. Durch Drehen der Düse in Bezug auf die Bewegungsrichtung v, d.h. durch Drehen der Düse um eine senkrecht durch die Materialaustrittsöffnung D_{E} verlaufende Symmetrieachse S der Düse bzw. der Materialaustrittsöffnung D_{E} um einen Rotationswinkel α kann die Breite der erzeugten Material-Bahn B_{V} variiert werden. Der Winkel α wird im Ausführungsbeispiel zwischen der aktuellen Bewegungsrichtung v und einer in der Ebene der Materialaustrittsöffnung D_{E} liegende Symmetrieachse a der Materialaustrittsöffnung D_{E} aufgespannt. Durch die Erfindung ist es möglich, mit ein und derselben Düse sowohl Material-Bahnen B_{V} verhältnismäßig großer Breite als auch sehr schmale Material-Bahnen zu erzeugen. Insbesondere kann, wie das Ausführungsbeispiel zeigt, auch im Verlauf einer Material-Bahn B_{V} deren Bahnbreite variiert werden. Ein zeit- und kostenaufwändiges Wechseln der Düse ist zur Erzeugung unterschiedlich breiter Material-Bahnen nicht mehr erforderlich.

Weiterhin ist aus Figur 3 ersichtlich, dass die gewünschte Sollkontur K sehr genau eingehalten werden kann.

Figur 4 veranschaulicht die Erzeugung einer krummlinigen Material-Bahn B_{K} konstanter Breite b durch Anpassung des Rotationswinkels β an den Bahnverlauf. Der Rotationswinkel β, um den die Düse um die senkrecht durch die Materialaustrittsöffnung D_{E} der Düse verlaufende Symmetrieachse S gedreht wird, wird stets so an die aktuelle Bewegungsrichtung v der Düse angepasst, dass die Breite b der erzeugten Material-Bahn konstant bleibt. Insbesondere wird im Ausführungsbeispiel der Rotationswinkel β stets so eingestellt, dass die in der Ebene der Materialaustrittsöffnung D_{E} verlaufende Symmetrieachse a der Materialaustrittsöffnung D_{E} mit der Bewegungsrichtung v einen Winkel von 90° einschließt. Damit wird unabhängig von der Bewegungsrichtung stets eine Material-Bahn B_{K} maximaler Breite b erzeugt. Ebenso ließen sich auch andere Winkel einstellen und in Bezug auf die jeweilige Bewegungsrichtung konstant halten, so dass vergleichsweise schmale Material-Bahnen konstanter Breite erzeugt werden.

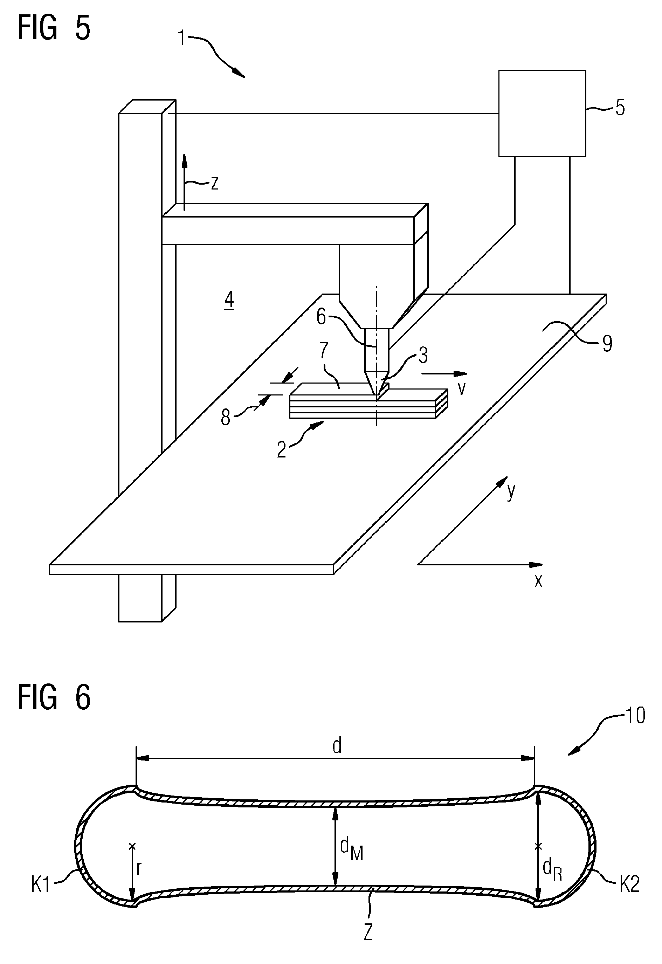

Figur 5 zeigt in schematischer, stark vereinfachter Darstellung die wesentlichen Komponenten einer erfindungsgemäßen Maschine 1 zur additiven Fertigung eines Werkstücks 2. Durch die drei gesteuerten Linearachsen x, y und z kann eine erfindungsgemäße Düse 3 beliebig im Arbeitsraum 4 der Maschine relativ zu dem Werkstück 2 positioniert werden. Gemäß dem Ausführungsbeispiel können ein Werkstücktisch 9 in x- und y-Richtung und eine Aufnahme der Düse 3 und damit die Düse 3 selbst in z-Richtung bezüglich eines ortsfesten Maschinen-Koordinatensystems x, y, z verfahren werden. Insbesondere kann durch eine entsprechende Steuerung der Achsen x, y und z mittels entsprechender Antriebe (nicht dargestellt) und der Steuereinrichtung 5 das Werkstück 2 schichtweise durch Materialextrusion hergestellt werden. Neben den gezeigten Achsen kann die betreffende Maschine 1 auch weitere Achsen, z.B. Rotationsachsen zum Schwenken des Werkstücktisches 9 oder Rotationsachsen zum Schwenken der Aufnahme der Düse 3 (nicht dargestellt) aufweisen.

Im Unterschied zu herkömmlichen Maschinen zur additiven Fertigung umfasst die erfindungsgemäße Maschine 1 weiterhin eine gesteuerte Rotationsachse 6, die im Ausführungsbeispiel mit der Symmetrieachse der Düse 3 bzw. einer senkrecht durch die Materialaustrittsöffnung (nicht dargestellt) verlaufende Symmetrieachse der Materialaustrittsöffnung der Düse 3 zusammenfällt, und mittels derer die Ausrichtung der Materialaustrittsöffnung der Düse 3 in Bezug auf die ortsfesten Maschinenachsen x, y und z bzw. in Bezug auf eine variable Bewegungsrichtung v der Düse 3 eingestellt werden kann. Durch Drehen der Düse 3 um einen bestimmten Winkel um die Rotationsachse 6 und die dynamisch Anpassung des so eingestellten Rotationswinkels in Bezug auf eine Referenzachse, beispielsweise eine der Linearachsen x, y, z der betreffenden Maschine 1, kann die Breite 8 der erzeugten Material-Bahn 7 in einfacher Weise eingestellt bzw. variiert werden. Vorteilhaft können durch diese Anordnung unter Verwendung ein und derselben Düse 3 Material-Bahnen 7 unterschiedlicher Breite 8 bzw. mit variabler Breite 8 erzeugt werden.

Ferner kann mittels der Steuereinrichtung 5 der Rotationswinkel derart dynamisch angepasst werden, dass sich auch bei krummlinigen Material-Bahnen in jedem Bereich der Material-Bahn die gewünschte Breite einstellt. Insbesondere wird mittels einer von der Steuereinrichtung 5 umfassten Steuerungssoftware bei einer Änderung der Krümmung bei der Bewegung der Düse 3 entlang einer gekrümmten Bahn eine bestimmte Breite der Bahn dadurch eingestellt, dass der Rotationswinkels, um den die Düse um die Rotationsachse gedreht wird, dynamisch an den Krümmungsradius der Bahn bzw. an die aktuelle Bewegungsrichtung v der Düse 3 angepasst wird.

Eine besonders vorteilhafte Form einer Materialaustrittsöffnung 10 einer erfindungsgemäßen Düse zeigt Figur 6. Die Materialaustrittsöffnung 10 wird links und rechts durch zwei jeweils wenigstens im Wesentlichen halbkreisförmige Strukturen K1 und K2 begrenzt. K1 und K2 sind in einem Abstand d voneinander angeordnet, der ein Vielfaches des Radius r der kreisförmigen Strukturen K1 und K2 beträgt. Zwischen den beiden kreisförmigen Abschnitten K1 und K2 wird die Materialaustrittsöffnung 10 durch einen Zwischenbereich Z begrenzt, der eine konkave Wölbung aufweist. Dies bedeutet, dass der Zwischenbereich Z in der Mitte schmaler ist als im Übergangsbereich zu den beiden Kreisabschnitten K1 und K2. Insbesondere ist die Breite d_{M} der Materialaustrittsöffnung in der Mitte der Materialaustrittsöffnung kleiner als der Durchmesser d_{R} der Halbkreise K1 oder K2. Durch die besondere Formgebung der Materialaustrittsöffnung 10 lässt sich erreichen, dass der Druckverlust während der Material Extrusion über die gesamte Materialaustrittsöffnung 10 zumindest näherungsweise den gleichen Wert aufweist.

## Patentansprüche

1. Düse (3) mit einer Materialaustrittsöffnung (D_{E}; 10) zur Materialextrusion bei der additiven Fertigung eines Werkstücks (2),
**dadurch gekennzeichnet, dass** die Materialaustrittsöffnung (D_{E}; 10) der Düse (3) einen länglichen Querschnitt aufweist.

2. Düse (3) nach Anspruch 1, wobei der Querschnitt der Materialaustrittsöffnung (D_{E}; 10) zwei einander gegenüberliegend angeordnete, zumindest näherungsweise halbkreisförmige Abschnitte (K1, K2) umfasst, deren Abstand (d) zueinander ein Vielfaches ihres Radius (r) beträgt.

3. Düse (3) nach Anspruch 2, wobei ein Zwischenbereich (Z) der Materialaustrittsöffnung (D_{E}; 10) zwischen den beiden zumindest näherungsweise halbkreisförmigen Abschnitten (K1, K2) in der Mitte schmaler ist als am Rand.

4. Verfahren zur additiven Fertigung eines Werkstücks (2), wobei zum Erzeugen einer Material-Bahn (7) eine Schmelze durch eine gemäß einem der Ansprüche 1 bis 3 ausgebildeten Düse (3) gedrückt und die Düse (3) relativ zum Werkstück (2) entlang einer vorbestimmten Bahn bewegt wird,
**dadurch gekennzeichnet, dass** die Düse (3) relativ zum Werkstück (2) um eine Rotationsachse (6) gedreht wird zum Einstellen der Breite (8) der erzeugten Material-Bahn (7).

5. Verfahren nach Anspruch 4, wobei die Rotationsachse (6) mit einer Symmetrieachse der Düse (3) und/oder der Materialaustrittsöffnung (D_{E}; 10) der Düse (3) zusammenfällt.

6. Verfahren nach Anspruch 4 oder 5, wobei bei einer Bewegung der Düse (3) entlang einer gekrümmten Bahn (B_{K}) ein Rotationswinkel (β), um den die Düse (3) relativ zum Werkstück (2) um die Rotationsachse (S) gedreht wird, an die jeweilig Bewegungsrichtung (v) angepasst wird.

7. Verfahren nach Anspruch 6, wobei der Rotationswinkel (β) während der Erzeugung der Material-Bahn (7) derart an die Bewegungsrichtung (v) angepasst wird, dass eine Material-Bahn (B_{K}) konstanter Breite (b; 8) erzeugt wird.

8. Steuerung (5) für eine Maschine (1) zur additiven Fertigung eines Werkstücks (2),
**gekennzeichnet durch** eine Steuerungssoftware, mittels der eine Düse (3) gemäß einem der Ansprüche 1 bis 3 gemäß einem Verfahren nach einem der Ansprüche 4 bis 7 entlang einer vorgebbaren Bahn (B_{V}, B_{K}) verfahrbar und um eine Rotationsachse (S) relativ zum Werkstück (2) drehbar ist.

9. Maschine (1) zur additiven Fertigung eines Werkstücks (2) mittels Materialextrusion, umfassend eine Positioniereinrichtung zur Positionierung einer Düse (3) in einem Arbeitsraum (4) ,
**gekennzeichnet durch** eine Düse (3) nach einem der Ansprüche 1 bis 3 und eine Steuereinrichtung (5) nach einem der Ansprüche 7 oder 8 zur Steuerung der Positioniereinrichtung, wobei die Positioniereinrichtung zur Drehung der Düse (3) relativ zum Werkstück (2) um eine Rotationsachse (6) eingerichtet ist und die Steuereinrichtung (5) zum Erzeugen einer Material-Bahn (7) einer vorgebbaren Breite (b; 8) durch Bestimmung eines Rotationswinkels (α, β) ausgebildet ist.
